(19) Europäisches Patentamt
European Patent Office
Office européen des brevets

(11) EP 4 089 154 A1

(12) **EUROPEAN PATENT APPLICATION**
published in accordance with Art. 153(4) EPC

(43) Date of publication:
**16.11.2022 Bulletin 2022/46**

(21) Application number: **21738343.9**

(22) Date of filing: **08.01.2021**

(51) International Patent Classification (IPC):
***C09K 3/00*** *(2006.01)* ***F21S 41/00*** *(2018.01)*
***F21S 45/00*** *(2018.01)*

(52) Cooperative Patent Classification (CPC):
**C09D 1/00; C09K 3/00; F21S 41/00; F21S 41/143; F21S 41/162; F21S 41/275; F21S 45/00**

(86) International application number:
**PCT/JP2021/000579**

(87) International publication number:
**WO 2021/141129 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.01.2020 JP 2020002860**

(71) Applicant: **Showa Denko Materials Co., Ltd.**
**Tokyo 100-6606 (JP)**

(72) Inventors:
- **KIKKAWA Chisato**
  **Tokyo 100-6606 (JP)**
- **KOTAKE Tomohiko**
  **Tokyo 100-6606 (JP)**
- **SHIMIZU Mari**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **ANTI-FOG METHOD FOR VEHICLE LAMP STRUCTURE, ANTI-FOGGING AGENT, AND HYDROPHILIC AGENT**

(57) Provided is an anti-fog method for a vehicle lamp structure, the method including: a step of applying an anti-fogging agent including colloidal silica and a liquid medium on a lens inner surface installed in a vehicle lamp structure to form a coating film; and a step of drying the coating film.

***Fig.1***

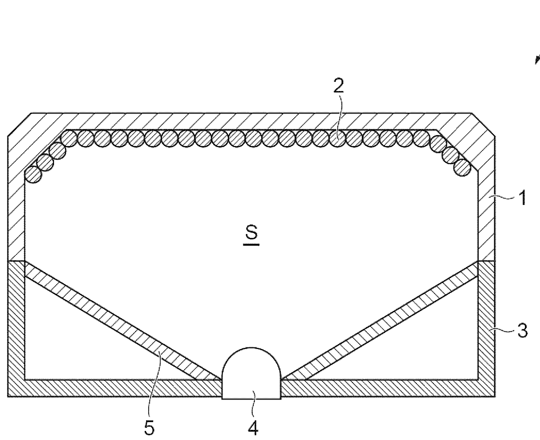


EP 4 089 154 A1

## Description

### Technical Field

The present invention relates to an anti-fog method for a vehicle lamp structure, an anti-fogging agent, and a hydrophilizing agent.

### Background Art

There is known a method of applying an anti-fogging agent composition including a surfactant on the inside of a lamp chamber of a lamp structure for a vehicle such as an automobile, where there is a risk of the occurrence of fogging due to dew condensation (see, for example, Patent Literature 1).

### Citation List

### Patent Literature

Patent Literature 1: Japanese Unexamined Patent Publication No. 2016-027134

### Summary of Invention

### Technical Problem

When moisture adheres to a coating film formed by means of an anti-fogging agent including a surfactant, the moisture instantaneously forms a water film due to the effect of the surfactant, and the occurrence of fogging is suppressed. However, when moisture flows down from the coating film surface, aggregated surfactant also flows down together, and as a result, dripping marks may be generated on the surface of the lamp chamber. Such dripping marks cause deterioration not only in the anti-fog function but also in the brightness as a vehicle lamp.

The present invention was achieved in view of the above-described circumstances, and it is an object of the invention to provide a novel anti-fog method for a vehicle lamp structure, which does not use a surfactant. It is another object of the present invention to provide an anti-fogging agent and a hydrophilizing agent used for this method.

### Solution to Problem

An aspect of the present invention relates to an anti-fog method for a vehicle lamp structure, the method including a step of applying an anti-fogging agent including colloidal silica and a liquid medium on the inner surface of a lens installed in a vehicle lamp structure to form a coating film; and a step of drying the coating film. With this method, anti-fog properties can be imparted to a vehicle lamp structure without using a surfactant.

An aspect of the present invention relates to an anti-fogging agent including colloidal silica and a liquid medium. This anti-fogging agent can be used for a novel anti-fog method for a vehicle lamp structure, which does not use a surfactant.

With regard to an embodiment of the anti-fogging agent, the content of the colloidal silica may be 0.01% to 20% by mass.

An embodiment of the anti-fogging agent may further include a silane coupling agent.

With regard to an embodiment of the anti-fogging agent, the content of the silane coupling agent may be 0.1 to 10.0 parts by mass with respect to 100 parts by mass of the colloidal silica.

With regard to an embodiment of the anti-fogging agent, the liquid medium may be water, an alcohol, or a mixed liquid of water and an alcohol.

An aspect of the present invention relates to a hydrophilizing agent including colloidal silica and a liquid medium. This hydrophilizing agent can impart anti-fog properties to a target surface without using a surfactant.

### Advantageous Effects of Invention

According to the present invention, a novel anti-fog method for a vehicle lamp structure, which does not use a surfactant, can be provided. Furthermore, according to the present invention, an anti-fogging agent and a hydrophilizing agent, which are used for this method, can be provided.

## Brief Description of Drawings

FIG. 1 is a diagram schematically illustrating a vehicle lamp structure.

## Description of Embodiments

Hereinafter, suitable exemplary embodiments of the present invention will be described in detail, optionally with reference to the drawings. However, the present invention is not intended to be limited to the following exemplary embodiments.

<Anti-fogging agent>

The anti-fogging agent includes colloidal silica and a liquid medium. Anti-fog properties can be imparted to a base material by applying the anti-fogging agent on the base material as a target of anti-fogging, or the like.

(Colloidal silica)

Regarding the colloidal silica, a colloidal silica having an average particle size (secondary particle size) of 1 to 1000 nm can be used. When the average particle size is 1 nm or more, particles are not likely to aggregate in the anti-fogging agent, and therefore, particles can easily adhere to the base material. On the other hand, when the average particle size is 1000 nm or less, the specific surface area of the particles increases, and the particles can easily adhere to the base material. From this viewpoint, the average particle size of the colloidal silica may be 3 to 700 nm and may be 5 to 500 nm.

The average particle size can be measured by, for example, the following procedure. First, about 100 μL (L represents liter; hereinafter, the same) of a colloidal silica dispersion liquid is measured and diluted with ion-exchanged water such that the content of the colloidal silica becomes approximately 0.05% by mass (content that gives a transmittance (H) of 60% to 70% at the time of measurement) to obtain a diluted solution. Then, the diluted solution is introduced into a sample tank of a laser diffraction type particle size distribution meter (manufactured by Horiba, Ltd., trade name: LA-920, refractive index: 1.93, light source: He-Ne laser, absorption 0), and the average particle size can be measured.

The number of silanol groups per 1 g of the colloidal silica may be $10\times10^{18}$ to $1000\times10^{18}$ groups/g, may be $50\times10^{18}$ to $800\times10^{18}$ groups/g, or may be $100\times10^{18}$ to $700\times10^{18}$ groups/g. When the number of silanol groups per 1 g of the colloidal silica is $10\times10^{18}$ groups/g or more, the number of chemical bonding points of the base material to functional groups increases, and therefore, the adhesiveness to the base material is likely to be enhanced. On the other hand, when the number of silanol groups is $1000\times10^{18}$ groups/g or less, sudden polycondensation reaction between colloidal silica molecules at the time of preparing an anti-fogging liquid can be suppressed, and reduction of chemical bonding points of the base material to functional groups can be suppressed.

The number of silanol groups (ρ [groups/g]) according to the present invention can be measured and calculated by titration such as follows.

[1] First, 15 g of colloidal silica is weighed in a container whose mass has been measured (X [g]) and is dispersed in an appropriate amount (100 ml or less) of water. In the case of a state of a dispersion liquid in which colloidal silica is dispersed in a medium such as water, the dispersion liquid is weighed in a container such that the amount of the colloidal silica is 15 g.

[2] Next, the pH is adjusted to 3.0 to 3.5 using 0.1 mol/L hydrochloric acid, the mass (Y [g]) at this time is measured, and the total mass of the liquid (Y - X [g]) is determined.

[3] The liquid in an amount corresponding to 1/10 of the mass obtained in the above-described item [2] ((Y - X)/10 [g]) is weighed in another container. The amount of the colloidal silica (A [g]) included in the liquid in this stage is 1.5 g.

[4] 30 g of sodium chloride is added thereto, and ultrapure water is further added to adjust the total amount to 150 g. This is adjusted to pH 4.0 with a 0.1 mol/L sodium hydroxide solution, and the resultant is used as a sample for titration.

[5] 0.1 mol/L sodium hydroxide is added dropwise to this sample for titration until the pH reaches 9.0, and the amount of sodium hydroxide (B [mol]) required for the pH to change from 4.0 to 9.0 is determined.

[6] The number of silanol groups carried by the silica particles is calculated by the following Formula (1):

$$\rho = B\cdot N_A/A\cdot S_{BET}\ldots(1)$$

wherein in Formula (1), $N_A$ [groups/mol] represents the Avogadro's number; and $S_{BET}$ [$m^2$/g] represents the BET specific surface area of the colloidal silica.

The above-described BET specific surface area $S_{BET}$ is determined according to a BET specific surface area method. Regarding a specific measurement method, for example, for a sample obtained by having colloidal silica placed in a dryer, dried at 150°C, subsequently introduced into a measurement cell, and vacuum-degassed at 120°C for 60 minutes, the BET specific surface area can be determined by a one-point method or a multi-point method of adsorbing nitrogen gas by using a BET specific surface area measuring apparatus. More specifically, first, colloidal silica dried at 150°C is finely crushed in a mortar (magnetic, 100 ml) and then introduced into a measurement cell as a sample for measurement, and the BET specific surface area $S_{BET}$ of this sample is measured by using a BET specific surface area measuring apparatus (product name: NOVE-1200) manufactured by Yuasa Ionics Inc.

The degree of association of the colloidal silica may be, for example, 5.0 or lower, may be 4.0 or lower, may be 3.0 or lower, may be 2.5 or lower, or may be 2.0 or lower. When the degree of association is in such a range, the specific surface area of the colloidal silica becomes appropriately large, and thereby the adhesiveness to the base material is enhanced. Furthermore, colloidal silica having such a degree of association is easily purchased. The degree of association may be 1.0 or higher, may be 1.3 or higher, or may be 1.5 or higher. When the degree of association is in such a range, the specific surface area of the colloidal silica becomes appropriately small, and thereby aggregation of the colloidal silica at the time of preparing an anti-fogging agent can be suppressed.

Here, according to the present specification, the degree of association of the colloidal silica in a colloidal silica dispersion liquid refers to the ratio between the average particle size of secondary particles of the colloidal silica and the biaxial average primary particle size of the colloidal silica (average particle size of secondary particles/biaxial average primary particle size) in the dispersion liquid. The average primary particle size can be measured by means of, for example, a known transmission electron microscope (for example, trade name: H-7100FA manufactured by Hitachi, Ltd.). For example, images of particles are taken by using an electron microscope, the biaxial average primary particle size is calculated for a predetermined number of any particles, and the average value of these is determined. In the case of colloidal silica, since the particle size is generally uniform, the number of particles to be measured may be, for example, about twenty particles. Incidentally, the average particle size of the secondary particles refers to a value determined by the above-mentioned method.

The shape of the colloidal silica is not particularly limited, and examples include a spherical shape, a cocoon type, an aggregate type, a confetti type, a chain shape, and a pearl necklace shape. Among these, a spherical shape is preferred from the viewpoints of the dispersibility in the anti-fogging agent and the adhesiveness to the base material.

In the colloidal silica, the surface may be coupling-treated with a modifying agent. The modifying agent is not particularly limited; however, examples include a silane coupling agent having a cationic group represented by the following General Formula (2), a silane coupling agent having a sulfonic acid group as an anionic group, and a compound having a functional group or the like, which can be converted to a silane coupling agent intended for a hydrophobization treatment.

wherein in Formula (2), R represents an alkyl group having 1 to 6 carbon atoms; R' represents an alkyl group having 1 to 3 carbon atoms; R" represents a hydrocarbon group having 1 to 4 carbon atoms, or a hydrocarbon group having 1 to 4 carbon atoms substituted with an amino group; m represents an integer from 0 to 2; p represents 1 or 2; n represents an integer from 1 to 3; and m + n + p = 4.

Specific examples of R include a methyl group, an ethyl group, a propyl group, an isopropyl group, a butyl group, an isobutyl group, a t-butyl group, a pentyl group, an isopentyl group, a neopentyl group, a hexyl group, and an isohexyl group; and an alkyl group having 1 to 3

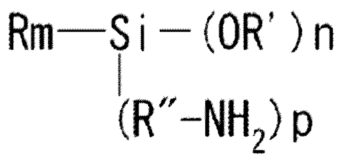

…(2)

carbon atoms is preferred, while a methyl group and an ethyl group are more preferred.

Specific examples of R' include a methyl group, an ethyl group, a propyl group, and an isopropyl group, and a methyl group and an ethyl group are preferred.

Among R", specific examples of the hydrocarbon having 1 to 4 carbon atoms include a methylene group, an ethylene group, a propylene group, an isopropylene group, a butylene group, and an isobutylene group, and an alkylene group having 2 to 4 carbon atoms is preferred, while an ethylene group, a propylene group, and a butylene group are preferred.

Among R", specific examples of the hydrocarbon group having 1 to 4 carbon atoms substituted with an amino group include an aminomethylene group, an aminoethylene group, an aminopropylene group, an aminoisopropylene

group, an aminobutylene group, and an aminoisobutylene group, and an aminoethylene group and an aminopropylene group are preferred.

Examples of the compound represented by the above-described General Formula (2) include aminopropyltrimethoxysilane, (aminoethyl)aminopropyltrimethoxysilane, aminopropyltriethoxysilane, aminopropyldimethylethoxysilane, aminopropylmethyldiethoxysilane, and aminobutyltriethoxysilane. These may be used singly, or a plurality of them may be used together.

Examples of the silane coupling agent having a functional group that can be chemically converted to a sulfonic acid group include: 1) a silane coupling agent having a sulfonic acid ester group that can be converted to a sulfonic acid group by hydrolysis, and 2) a silane coupling agent having a mercapto group and/or a sulfide group that can be converted to a sulfonic acid group by oxidation. Since sulfonic acid modification of the colloidal silica surface is carried out in a solution, in order to increase the modification efficiency, it is preferable to use the latter silane coupling agent having a mercapto group and/or a sulfide group.

Examples of the silane coupling agent having a mercapto group include 3-mercaptopropyltrimethoxysilane, 2-mercaptopropyltriethoxysilane, 2-mercaptoethyltrimethoxysilane, and 2-mercaptoethyltriethoxysilane.

Examples of the silane coupling agent having a sulfide group include bis(3-triethoxysilylpropyl) disulfide.

The silane coupling agent having a mercapto group and the silane coupling agent having a sulfide group may be used singly, or a plurality of the silane coupling agents may be used together.

Examples of the silane coupling agent intended for a hydrophobization treatment include a silylating agent. A silylation reaction is carried out by incorporating a disiloxane compound and/or a monoalkoxysilane compound. Examples of the disiloxane compound as a silylating agent include a compound represented by the following General Formula (I):

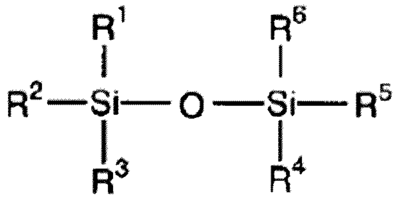

...(I)

wherein in Formula (I), $R^1$, $R^2$, $R^3$, $R^4$, $R^5$, and $R^6$ each independently represent an alkyl group having 1 to 20 carbon atoms, or a phenyl group.

Examples of the disiloxane compound include hexamethyldisiloxane, 1,3-dibutyltetramethyldisiloxane, 1,3-diphenyltetramethyldisiloxane, 1,3-divinyltetramethyldisiloxane, hexaethyldisiloxane, and 3-glycidoxypropylpentamethyldisiloxane, and hexamethyldisiloxane is preferred.

Examples of the monoalkoxysilane compound as the silylating agent include a compound represented by the following General Formula (II):

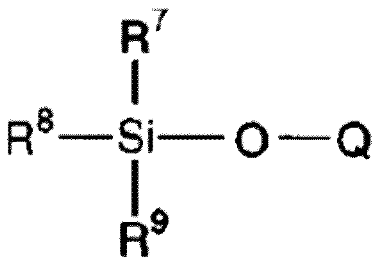

...(II)

wherein in Formula (II), $R^7$, $R^8$, and $R^9$ each independently represent an alkyl group having 1 to 20 carbon atoms, or a phenyl group; and Q represents an alkyl group having 1 to 3 carbon atoms.

Examples of the monoalkoxysilane compound include trimethylmethoxysilane, trimethylethoxysilane, trimethylpropoxysilane, phenyldimethylethoxysilane, and chloropropyldimethylmethoxysilane, and trimethylmethoxysilane, trimethylethoxysilane, and trimethylpropoxysilane are preferred.

The silylating agents may be used singly, or two or more kinds thereof may be used in combination.

The colloidal silica may contain a metal oxide other than silicon dioxide. The type of the metal oxide is not particularly limited; however, for example, alumina may be mentioned. Regarding such a colloidal silica, a colloidal silica in which aluminosilicate in an amount sufficient for the stabilization of a silica sol is firmly formed on the surface of

colloidal silica.

The content of the colloidal silica can be set to 0.01% to 20% by mass based on the total amount of the anti-fogging agent. When the content is 0.01% by mass or more, sufficient anti-fog properties are likely to be exhibited, and when the content is 20% by mass or less, the polycondensation reaction of silanol groups between the particles is suppressed so that the anti-fog properties (hydrophilicity) are easily maintained. From this viewpoint, the content of the colloidal silica may be 0.05% to 15% by mass, may be 0.1% to 10% by mass, or may be 1% to 5% by mass.

The colloidal silica can be purchased as a colloidal silica dispersion liquid. Examples of the dispersion medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethyl acetamide, N-methylpyrrolidone, toluene, methyl ethyl ketone, methyl isobutyl ketone, cyclohexane, and ethyl acetate. The dispersion medium may be water, an alcohol, or a mixed liquid of water and an alcohol. These can be selected according to the SP value of the base material. For example, when the base material is polycarbonate, an alcohol is preferred, and specifically, isopropyl alcohol, methyl alcohol, and ethyl alcohol are preferred. Incidentally, the SP value represents a measure of affinity between substances. Substances having similar solubility parameters easily mix with each other.

The pH of the colloidal silica dispersion liquid may be 2 to 10. When the pH is 6 to 8, the hydrolysis reaction rate of the alkoxy groups partially remaining on the surface of the colloidal silica is slowed down, and therefore, a colloidal silica having the alkoxy groups remaining therein can be easily formed into a coating film. In this case, since the polycondensation reaction of silanol groups by moisture absorption can be suppressed, the anti-fog properties (hydrophilicity) of the film surface are easily maintained. When the pH is 2 to 5 or 8 to 10, the hydrolysis reaction rate of the alkoxy groups partially remaining on the surface of the colloidal silica is increased, and therefore, more silanol groups can be generated so that the adhesiveness to the substrate is likely to be enhanced.

The pH of the colloidal silica dispersion liquid can be measured with a pH meter (for example, manufactured by Denki Kagaku Keiki Co., Ltd., product number: PHL-40). Regarding the measured value of pH, three-point calibration is performed by using standard buffer solutions (phthalate pH buffer solution pH: 4.01 (25°C), neutral phosphate pH buffer solution pH: 6.86 (25°C), and borate pH buffer solution pH: 9.18 (25°C)), an electrode is put into the dispersion liquid, and a value that has been stabilized after a lapse of two minutes or longer is adopted.

It is preferable that the zeta potential of the colloidal silica in the dispersion liquid is -50 mV to 40 mV. When the zeta potential is -10 mV to 10 mV, the repulsion between particles upon being coated is decreased, the particles adhere densely to the base material, and therefore, the hydrophilicity of the base material is likely to be enhanced. When the zeta potential is -50 mV to -11 mV or 11 mV to 40 mV, the particles are likely to repel each other in the dispersion liquid, the dispersibility is increased, and therefore, aggregation of the particles is easily suppressed.

The zeta potential of the colloidal silica can be measured with a zeta potential measuring device (for example, manufactured by Beckman Coulter, Inc., product No.: Coulter Delsa 440). Regarding the method for measuring the zeta potential, first, a test liquid is prepared by adding pure water to a colloidal silica dispersion liquid such that the silica particle concentration is 5 ppm based on the total amount of the test liquid and dispersing the silica particles by an ultrasonication treatment. Next, when the test liquid is placed in a measurement cell having platinum electrodes attached on both sides, and a voltage of 10 V is applied to the two electrodes, charged silica particles move the electrode side having the polarity opposite to the charge. Then, the movement speed of these charged silica particles is determined.

The raw material of the colloidal silica may be water glass or an alkoxysilane and is not particularly limited.

The production process in the case where the raw material is water glass is not particularly limited; however, for example, particles are produced by heating sodium silicate by a hydrothermal synthesis method and concentrating the resultant. For example, aggregates having a three-dimensional network structure may be produced in a state in which the growth of primary particles is suppressed at an acidic pH, and these aggregates may be crushed; or block-shaped aggregates may be produced by accelerating the growth of primary particles at an alkaline pH, and these aggregates may be crushed.

The production process in the case where the raw material is an alkoxysilane is not particularly limited; however, for example, particles are produced by sol-gel synthesizing an alkoxysilane. For example, a hydrolysis reaction of an alkoxysilane may be promoted, subsequently a polycondensation reaction may be promoted to obtain a gel, and then the internal solvent may be removed by a heat treatment. Alternatively, after a gel is obtained, the solvent may be substituted with a predetermined solvent.

A commercially available product may be used as the colloidal silica dispersion liquid, and examples include IPA-ST (manufactured by Nissan Chemical Corporation), IPA-ST-L (manufactured by Nissan Chemical Corporation), IPA-ST-ZL (manufactured by Nissan Chemical Corporation), IPA-ST-UP (manufactured by Nissan Chemical Corporation), MA-ST-M (manufactured by Nissan Chemical Corporation), MA-ST-L (manufactured by Nissan Chemical Corporation), MA-ST-ZL (manufactured by Nissan Chemical Corporation), MA-ST-UP (manufactured by Nissan Chemical Corporation), EG-ST (manufactured by Nissan Chemical Corporation), EG-ST-XL-30 (manufactured by Nissan Chemical Corporation), NPC-ST-30 (manufactured by Nissan Chemical Corporation), PGM-ST (manufactured by Nissan Chemical Corporation), PGM-ST-UP (manufactured by Nissan Chemical Corporation), DMAC-ST (manufactured by Nissan Chemical Corporation), DMAC-ST-ZL (manufactured by Nissan Chemical Corporation), NMP-ST (manufactured by Nissan Chemical Corporation), TOL-ST (manufactured by Nissan Chemical Corporation), MEK-ST-40 (manufactured by Nissan Chemical Corporation), MEK-ST-L (manufactured by Nissan Chemical Corporation), MEK-ST-ZL (manufactured by Nissan Chemical Corporation), MEK-ST-UP (manufactured by Nissan Chemical Corporation), MIBK-ST (manufactured by Nissan Chemical Corporation), MIBK-ST-L (manufactured by Nissan Chemical Corporation), CHO-ST-M (manufactured by Nissan Chemical Corporation), EAC-ST (manufactured by Nissan Chemical Corporation), PMA-ST (manufactured by Nissan Chemical Corporation), MEK-EC-2130Y (manufactured by Nissan Chemical Corporation), MEK-EC-2430Z (manufactured by Nissan Chemical Corporation), MEK-EC-2140Z (manufactured by Nissan Chemical Corporation), MEK-AC-4130Z (manufactured by Nissan Chemical Corporation), MEK-AC-5140Z (manufactured by Nissan Chemical Corporation), PGM-AC-2140Y (manufactured by Nissan Chemical Corporation), PGM-AC-4130Y (manufactured by Nissan Chemical Corporation), MIBK-AC-2140Z (manufactured by Nissan Chemical Corporation), MIBK-SD-L (manufactured by Nissan Chemical Corporation), ST-XS (manufactured by Nissan Chemical Corporation), ST-OXS (manufactured by Nissan Chemical Corporation), ST-NXS (manufactured by Nissan Chemical Corporation), ST-CXS (manufactured by Nissan Chemical Corporation), ST-S (manufactured by Nissan Chemical Corporation), ST-OS (manufactured by Nissan Chemical Corporation), ST-NS (manufactured by Nissan Chemical Corporation), ST-30 (manufactured by Nissan Chemical Corporation), ST-O (manufactured by Nissan Chemical Corporation), ST-N (manufactured by Nissan Chemical Corporation), ST-C (manufactured by Nissan Chemical Corporation), ST-AK (manufactured by Nissan Chemical Corporation), ST-50-T (manufactured by Nissan Chemical Corporation), ST-O-40 (manufactured by Nissan Chemical Corporation), ST-N-40 (manufactured by Nissan Chemical Corporation), ST-CM (manufactured by Nissan Chemical Corporation), ST-30L (manufactured by Nissan Chemical Corporation), ST-OL (manufactured by Nissan Chemical Corporation), ST-AK-L (manufactured by Nissan Chemical Corporation), ST-YL (manufactured by Nissan Chemical Corporation), ST-OYL (manufactured by Nissan Chemical Corporation), ST-AK-YL (manufactured by Nissan Chemical Corporation), ST-ZL (manufactured by Nissan Chemical Corporation), MP-1040 (manufactured by Nissan Chemical Corporation), MP-2040 (manufactured by Nissan Chemical Corporation), MP-4540M (manufactured by Nissan Chemical Corporation), ST-UP (manufactured by Nissan Chemical Corporation), ST-OUP (manufactured by Nissan Chemical Corporation), ST-PS-S (manufactured by Nissan Chemical Corporation), ST-PS-SO (manufactured by Nissan Chemical Corporation), ST-PS-M (manufactured by Nissan Chemical Corporation), ST-PS-MO (manufactured by Nissan Chemical Corporation), PL-1-IPA (manufactured by Fuso Chemical Co., Ltd.), PL-1-TOL (manufactured by Fuso Chemical Co., Ltd.), PL-2L-PGME (manufactured by Fuso Chemical Co., Ltd.), PL-2L-MEK (manufactured by Fuso Chemical Co., Ltd.), PL-2L (manufactured by Fuso Chemical Co., Ltd.), PL-3 (manufactured by Fuso Chemical Co., Ltd.), PL-4 (manufactured by Fuso Chemical Co., Ltd.), PL-5 (manufactured by Fuso Chemical Co., Ltd.), PL-1H (manufactured by Fuso Chemical Co., Ltd.), PL-3H (manufactured by Fuso Chemical Co., Ltd.), PL-5H (manufactured by Fuso Chemical Co., Ltd.), BS-2L (manufactured by Fuso Chemical Co., Ltd.), BS-3L (manufactured by Fuso Chemical Co., Ltd.), BS-5L (manufactured by Fuso Chemical Co., Ltd.), HL-2L (manufactured by Fuso Chemical Co., Ltd.), HL-3L (manufactured by Fuso Chemical Co., Ltd.), HL-4L (manufactured by Fuso Chemical Co., Ltd.), PL-3-C (manufactured by Fuso Chemical Co., Ltd.), PL-3-D (manufactured by Fuso Chemical Co., Ltd.), TCSOL800 (manufactured by TAMA CHEMICALS CO., LTD.), SI-40 (manufactured by JGC Catalysts and Chemicals Ltd.), SI-50 (manufactured by JGC Catalysts and Chemicals Ltd.), SI-45P (manufactured by JGC Catalysts and Chemicals Ltd.), SI-80P (manufactured by JGC Catalysts and Chemicals Ltd.), SIK-23 (manufactured by JGC Catalysts and Chemicals Ltd.), S-30H (manufactured by JGC Catalysts and Chemicals Ltd.), SIK-15 (manufactured by JGC Catalysts and Chemicals Ltd.), and SI-550 (manufactured by JGC Catalysts and Chemicals Ltd.).

(Liquid medium)

Examples of the liquid medium include those similar to the dispersing medium included in the colloidal silica dispersion liquid. The liquid medium may be water, an alcohol, or a mixed liquid of water and an alcohol. The base material of a lens inner surface installed in the most general-purpose vehicle lamp structures is polycarbonate. From the viewpoint that the SP value is close to that of polycarbonate, and adhesiveness is easily secured, the liquid medium can be an alcohol, and isopropyl alcohol, methyl alcohol, and ethyl alcohol are preferred.

(Silane coupling agent)

The anti-fogging agent may further include a silane coupling agent. By including a silane coupling agent, the anti-fog properties of the anti-fog film is easily maintained for a long period of time.
Examples of the silane coupling agent include silane compounds having a vinyl group, an epoxy group, a styryl group, an acryloyl group, a methacryloyl group, an amino group, a ureido group, an isocyanate group, an isocyanurate group, a mercapto group, a fluoro group, an alkyl group, and the like, or a silane oligomer having a silanol group.
Examples of the silane coupling agent having a vinyl group include KBM-1003 and KBE-1003 (all trade names,

manufactured by Shin-Etsu Chemical Co., Ltd.; hereinafter, the same).

Examples of the silane coupling agent having an epoxy group include KBM-303, 402, 403, KBE-402, 403, X-12-981S, and X-12-984S.

Examples of the silane coupling agent having a styryl group include KBM-1403.

Examples of the silane coupling agent having a methacryloyl group include KBM-502, 503, KBE-502, and 503.

Examples of the silane coupling agent having an acryloyl group include KBM-5103, X-12-1048, and X-12-1050.

Examples of the silane coupling agent having an amino group include KBM-602, 603, 903, 573, 575, KBE-903, 9103P, and X-12-972F.

Examples of the silane coupling agent having a ureido group include KBE-585.

Examples of the silane coupling agent having an isocyanate group include KBE-9007 and X-12-1159L.

Examples of the silane coupling agent having an isocyanurate group include KBM-9659.

Examples of the silane coupling agent having a mercapto group include KBM-802, 803, X-12-1154, and X-12-1156.

Examples of the silane coupling agent having a fluoro group include KBM-7103.

Examples of the silane coupling agent having an alkyl group include aliphatic systems such as KBM-13, KBM-22, KBM-103, KBM-202SS, KBM-3033, KBM-3063, KBM-3103C, KBM-3066, KBM-7103, KBE-22, KBE-103, KBE-3033, KBE-3063, and KBE-3083.

Examples of the silane oligomer having a silanol group include ethyl silicate 28, ethyl silicate 28P, ethyl silicate 40, ethyl silicate 48, EMS-485, methyl silicate 51, methyl silicate 53A, N-propyl silicate, and N-butyl silicate.

Regarding the silane coupling agent, one kind thereof may be used alone, or two or more kinds thereof may be used in combination, according to the purpose, use application, and the like. However, from the viewpoint that the anti-fog film has excellent anti-fog properties, the silane coupling agent may be a silane coupling agent having an amino group, an epoxy group, or an acryloyl group, and may be a silane coupling agent having an amino group at the end.

The content of the silane coupling agent (blending amount with respect to the colloidal silica) in the anti-fogging agent can be set to 0.1 to 10.0 parts by mass with respect to 100 parts by mass of the colloidal silica. When the content is 0.1 parts by mass or more, the anti-fog properties of the anti-fog film are easily maintained for a long period of time, and when the content is 10.0 parts by mass or less, aggregation of the colloidal silica in the anti-fogging agent is easily suppressed. From this viewpoint, the content of the silane coupling agent may be 0.5 to 7.0 parts by mass or may be 0.7 to 5.0 parts by mass.

(Other components)

The anti-fogging agent may include various conventional additives such as an oxidation inhibitor, an ultraviolet absorber, and a photostabilizer as necessary, to the extent that does not inhibit the effects of the anti-fogging agent. Furthermore, the anti-fogging agent may also include nitric acid, acetic acid, hydrochloric acid, nitric acid, phosphoric acid, sulfuric acid, para-toluenesulfonic acid, benzenesulfonic acid, methanesulfonic acid, phenolsulfonic acid, oxalic acid, maleic acid, malonic acid, tartaric acid, citric acid, malic acid, acetic acid, lactic acid, succinic acid, benzoic acid, ammonia, urea, imidazole, and the like as anti-foaming agents, catalysts, and the like, which are used at the time of preparing raw materials.

The anti-fogging agent is prepared by mixing colloidal silica and optionally a silane coupling agent and other components with a liquid medium. When the anti-fogging agent includes colloidal silica and a silane coupling agent, the anti-fogging agent may be prepared by preparing a colloidal silica dispersion liquid and a silane coupling agent dispersion liquid in advance, and then mixing the two.

<Anti-fog method for vehicle lamp structure>

The anti-fog method for a vehicle lamp structure includes a step of applying an anti-fogging agent including colloidal silica and a liquid medium on the lens inner surface installed in a vehicle lamp structure to form a coating film (coating step), and a step of drying the coating film (drying step). Prior to the coating step, a cleaning step may be carried out for the purpose of removing a mold release agent that may be possibly adhering to the lens surface.

(Cleaning step)

The cleaning liquid used for the cleaning step is not particularly limited; however, under the circumstances that the base material of the lens inner surface installed in the most general-purpose vehicle lamp structures is polycarbonate, the cleaning liquid is preferably a liquid that does not dissolve a polycarbonate base material, and more preferably water, an alcohol, or the like. Specifically, water, isopropyl alcohol, methanol, ethanol, and the like are preferred. The cleaning step may be carried out by wiping the base material by using a cloth soaked with the cleaning liquid, or the like.

(Coating step)

The coating step is, for example, a step of applying the above-described anti-fogging agent on the lens inner surface. The anti-fogging agent may be applied over the entire lens inner surface or may be selectively applied on a portion.
The coating method is not particularly limited; however, examples include a spin coating method, a dip coating method, a spray coating method, a flow coating method, a bar coating method, and a gravure coating method. Particularly, a spray coating method is preferable from the viewpoint that an anti-fog film having a uniform thickness is easily formed even on a surface to be treated having surface unevenness, and from the viewpoint of having high productivity and high use efficiency of the anti-fogging agent. These methods may be used singly, or two or more kinds thereof may be used in combination. Incidentally, coating may be carried out by soaking a cloth or the like with the anti-fogging agent.
The coating amount is not limited because the coating amount is dependent on the components of the anti-fogging agent, contents thereof, and the like; however, for example, the coating amount can be set to $10^{-9}$ to $10^3$ g/m$^2$.
The temperature of the anti-fogging agent used for the application step may be, for example, 1°C to 50°C or may be 10°C to 30°C. By adjusting the temperature to 1°C or higher, the anti-fog properties and adhesiveness tend to be further enhanced, and by adjusting the temperature to 50°C or lower, transparency of the anti-fog film tend to be easily obtained. The treatment time using the anti-fogging agent can be set to, for example, 1 second to 1 hour and can be set to 5 to 30 minutes.

(Drying step)

In the present step, the anti-fogging agent is applied, and then the liquid medium is volatilized from the anti-fogging agent. The liquid medium can be volatilized by, for example, leaving the anti-fogging agent to stand at normal temperature. However, by carrying out the present step at a higher temperature, the adhesiveness between the lens inner surface and the anti-fog film can be further enhanced. The drying temperature at this time is not particularly limited and may vary depending on the heat-resistant temperature of the lens; however, for example, the drying temperature may be 5°C to 300°C or may be 10°C to 200°C. By setting the above-described temperature to 5°C or higher, superior adhesiveness can be achieved, and by setting the temperature to 300°C or lower, deterioration caused by heat can be further suppressed. The drying time can be set to 30 seconds to 150 hours. Through the present step, an anti-fog film including colloidal silica is formed on the lens inner surface.
The thickness of the anti-fog film is not particularly limited; however, from the viewpoints of transparency, anti-fog properties, and the like, the thickness can be set to about 1 nm to 5 mm, 5 nm to 10 μm, or 10 nm to 1 μm.
The water contact angle of the anti-fog film can be set to 40° or less with respect to 1 μL of liquid droplets of ultrapure water and may be 20° or less. As a result, anti-fog properties can be sufficiently exhibited. The contact angle can be calculated by means of an average value of ten measurements made using a contact angle meter.
The anti-fog film can have a visible light transmittance of 85% or higher, 90% or higher, or 95% or higher. As a result, the brightness of the vehicle lamp can be maintained sufficiently high. The visible light transmittance of the anti-fog can be measured by means of, for example, a U-3500 type recording spectrophotometer manufactured by Hitachi, Ltd.
The anti-fog film can have a haze of 6.0 or less, 3.0 or less, or 1.0 or less. As a result, the brightness of the vehicle lamp can be maintained sufficiently high. The haze of the anti-fog film can be measured using, for example, a haze meter (NDH2000 manufactured by NIPPON DENSHOKU INDUSTRIES CO., LTD.).
The anti-fog film can have a YI of 4.0 or less, 3.0 or less, or 1.5 or less. As a result, the brightness of the vehicle lamp can be maintained sufficiently high. The YI of the anti-fog film can be measured using, for example, a chromaticity measuring device (manufactured by NIPPON DENSHOKU INDUSTRIES CO., LTD., product name "300A").
FIG. 1 is a diagram schematically illustrating a vehicle lamp structure. The lens inner surface of the vehicle lamp structure is subjected to an anti-fogging treatment by an anti-fog method for a vehicle lamp structure using the above-described anti-fogging agent. The lamp structure 10 shown in FIG. 1 includes a lamp housing 3 configured to have a concave shape with one side open, and a lens 1 occupying the open side of the lamp housing 3. The material of the lens 1 is, for example, polycarbonate. A lamp chamber S is formed by the lamp housing 3 and the lens 1. The lamp housing 3 is provided with a light source 4 disposed inside the lamp chamber S. As the light source 4, an incandescent bulb, a LED bulb, a halogen bulb, or the like is appropriately employed. In the lamp chamber S, as shown in the diagram, a reflector 5 that functions as a reflecting plate for the light of the light source 4 may be provided so as to surround the light source 4 from the rear side. On the inner surface of the lens 1, that is, the surface facing the lamp chamber S, an anti-fog film 2 formed by means of the above-described anti-fogging agent is provided. The anti-fog film 2 may be provided over the entire inner surface of the lens 1 or may be selectively provided in a portion as shown in FIG. 1.

<Hydrophilizing agent>

Since the anti-fogging agent can hydrophilize a target surface, the anti-fogging agent can be regarded as a

hydrophilizing agent. The anti-fog agent and the hydrophilizing agent are both treatment agents including colloidal silica and a liquid medium. With regard to specific embodiments of the hydrophilizing agent, the above-given description on the anti-fogging agent can be referred to.

By using a hydrophilizing agent, the base material can be subjected to an anti-fogging treatment. That is, an anti-fog method for the base material includes a step of applying a hydrophilizing agent including colloidal silica and a liquid medium on the base material surface to form a coating film; and a step of drying the coating film.

In addition to the above-described polycarbonate, examples of the material constituting the base material include resin materials such as an acrylic polymer, polyamide, polyacrylate, polyimide, an acrylonitrile-styrene copolymer, a styrene-acrylonitrile-butadiene terpolymer, polyvinyl chloride, polyethylene, and polycarbonate; metal materials such as aluminum, magnesium, copper, zinc, iron, titanium, chromium, manganese, cobalt, and nickel; ceramic materials such as silicon oxide, aluminum oxide, magnesium oxide, copper oxide, zinc oxide, iron oxide, titanium oxide, chromium oxide, manganese oxide, cobalt oxide, and nickel oxide; and glass. Articles including such base materials include the above-described vehicle lamp structure (an automobile headlight, or the like) as well as a vehicle windshield, eyeglasses, goggles, a mirror, a storage container, a window, a camera lens, and the like.

## Examples

Next, the present invention will be described in more detail by way of the following Examples; however, these Examples are not intended to limit the present invention.

<Preparation of treatment agent>

(Colloidal silica dispersion liquid 1)

3.75 mL of IPA-ST (manufactured by Nissan Chemical Corporation, 20 wt%-IPA), which is an isopropyl alcohol-dispersed silica sol, 4.0 mL of nitric acid (1 wt%-aq), and 40.5 mL of isopropyl alcohol were mixed and stirred for 5 minutes, and colloidal silica dispersion liquid 1 was obtained.

(Colloidal silica dispersion liquid 2)

1.75 mL of IPA-ST (manufactured by Nissan Chemical Corporation, 20 wt%-IPA), which is an isopropyl alcohol-dispersed silica sol, 4.0 mL of nitric acid (1 wt%-aq), and 41.5 mL of isopropyl alcohol were mixed and stirred for 5 minutes, and colloidal silica dispersion liquid 2 was obtained.

(Colloidal silica dispersion liquid 3)

3.75 mL of IPA-ST (manufactured by Nissan Chemical Corporation, 20 wt%-IPA), which is an isopropyl alcohol-dispersed silica sol, 4.0 mL of nitric acid (1 wt%-aq), and 40.5 mL of isopropyl alcohol were mixed and stirred for 5 minutes, and colloidal silica dispersion liquid 3 was obtained.

(Silane coupling agent stock solution 1)

3.75 mL of KBE-9103P (manufactured by Shin-Etsu Chemical Co., Ltd.), which is 3-triethoxysilyl-N-(1,3-dimethylbutylidene)propylamine, 5.0 mL of acetic acid (1 M-aq), and 41.5 mL of isopropyl alcohol were mixed and stirred for 5 minutes, and silane coupling agent stock solution 1 was obtained.

(Silane coupling agent stock solution 2)

Silane coupling agent stock solution 2 was obtained in the same manner as in the case of the silane coupling agent stock solution 1, except that KBM-603 (manufactured by Shin-Etsu Chemical Co., Ltd.), which is N-2-(aminoethyl)-3-aminopropyltrimethoxysilane, was used instead of KBE-9103P.

(Silane coupling agent stock solution 3)

Silane coupling agent stock solution 3 was obtained in the same manner as in the case of the silane coupling agent stock solution 1, except that KBE-403 (manufactured by Shin-Etsu Chemical Co., Ltd.), which is 3-glycidoxypropyltriethoxysilane, was used instead of KBE-9103P.

(Silane coupling agent stock solution 4)

Silane coupling agent stock solution 4 was obtained in the same manner as in the case of the silane coupling agent stock solution 1, except that KBM-5103 (manufactured by Shin-Etsu Chemical Co., Ltd.), which is 3-acryloxypropyltrimethoxysilane, was used instead of KBE-9103P.

(Silane coupling agent dispersion liquids 1 to 4)

Silane coupling agent dispersion liquids 1 to 4, in which the mass ratios of "silane coupling agent stock solution 2:isopropyl alcohol" were 1:19 (dispersion liquid 1), 1:14 (dispersion liquid 2), 1:9 (dispersion liquid 3), and 1:4 (dispersion liquid 4), respectively, were obtained by adjusting the amount of addition of isopropyl alcohol to the silane coupling agent stock solution 2.

(Silane coupling agent dispersion liquid 5)

Silane coupling agent dispersion liquid 5 was obtained in the same manner as in the case of the silane coupling agent dispersion liquid 2, except that the silane coupling agent stock solution 1 was used instead of the silane coupling agent stock solution 2 (that is, such that the mass ratio of silane coupling agent stock solution 1:isopropyl alcohol was 1:14).

(Silane coupling agent dispersion liquid 6)

Silane coupling agent dispersion liquid 6 was obtained in the same manner as in the case of the silane coupling agent dispersion liquid 2, except that the silane coupling agent stock solution 4 was used instead of the silane coupling agent stock solution 2 (that is, such that the mass ratio of silane coupling agent stock solution 4:isopropyl alcohol was 1:14).

(Silane coupling agent dispersion liquid 7)

Silane coupling agent dispersion liquid 7 was obtained in the same manner as in the case of the silane coupling agent dispersion liquid 2, except that the silane coupling agent stock solution 3 was used instead of the silane coupling agent stock solution 2 (that is, such that the mass ratio of silane coupling agent stock solution 3:isopropyl alcohol was 1:14).

(Polyether stock solution 1)

Polyether stock solution 1 was obtained in the same manner as in the case of the silane coupling agent stock solution 2, except that BY16 (manufactured by Dow Corning Toray Co., Ltd.), which is a polyether having an amino group, was used instead of KBM603.

(Polyether stock solution 2)

Polyether stock solution 2 was obtained in the same manner as in the case of the silane coupling agent stock solution 2, except that L-77 (manufactured by Momentive Performance Materials Japan LLC), which is a polyether having an ethoxy group, was used instead of KBM603.

(Polyether stock solution 3)

Polyether stock solution 3 was obtained in the same manner as in the case of the silane coupling agent stock solution 2, except that L-7657 (manufactured by Momentive Performance Materials Japan LLC), which is a polyether having an ethoxy group, was used instead of KBM603.

(Polyether dispersion liquids 1 to 3)

Polyether dispersion liquids 1 to 3 were obtained in the same manner as in the case of the silane coupling agent dispersion liquid 2, except that the polyether stock solutions 1 to 3 were used instead of the silane coupling agent stock solution 2 (that is, such that the mass ratio of each polyether stock solution:isopropyl alcohol was 1:14).

A summary of the treatment agent (anti-fogging agent) of each example is shown in Table 1 and Table 2. The details of the treatment agent of each example are as follows.

(Examples 1 to 3)

Colloidal silica dispersion liquids 1 to 3 were used as treatment agents.

(Examples 4 to 6)

Colloidal silica dispersion liquid 1 and each of silane coupling agent dispersion liquids 5, 7, and 6 were mixed and stirred for 5 minutes, and a mixed treatment agent including colloidal silica and a silane coupling agent was obtained. The mixing ratio (parts by mass) of the colloidal silica dispersion liquid and the silane coupling agent dispersion liquid was set to 19:1.

(Examples 7 to 10)

Colloidal silica dispersion liquid 1 and each of silane coupling agent dispersion liquids 1 to 4 were mixed and stirred for 5 minutes, and a mixed treatment agent including colloidal silica and a silane coupling agent was obtained. The mixing ratio (parts by mass) of the colloidal silica dispersion liquid 1 and each silane coupling agent dispersion liquid was set to 19:1.

(Comparative Examples 1 to 4)

Silane coupling agent dispersion liquids 2, 5, 6, and 7 were used as treatment agents.

(Comparative Examples 5 to 7)

Polyether dispersion liquids 1 to 3 were used as treatment agents.

<Anti-fog treatment on polycarbonate base material>

A base material made of polycarbonate and having a size of 5 cm on each side × 2 mm was prepared, and the base material was cleaned by wiping the base material surface using Bemcot soaked with isopropyl alcohol. On the cleaned base material surface, the above-described treatment agent was applied using Bemcot. The treatment agent temperature was 25°C, the treatment time was 1 minute, and the coating amount was set to 160 $g/m^2$. Subsequently, the coating film was dried for 10 minutes at 110°C. As a result, a polycarbonate material with an anti-fog film (coating film) was obtained as a sample material. The thickness of the anti-fog film was 10 to 50 nm. Incidentally, in Comparative Example 1, since repellence of the treatment agent occurred at the time of coating, a coating film could not be formed.

<Evaluation>

The sample materials were subjected to the following evaluations. The results are shown in Table 1 and Table 2. Incidentally, the n number was set to 3 in all the evaluations.

(Breathing test)

In a laboratory where the room temperature was 25°C, breath was blown on an anti-fog film from a position 5 cm away from the anti-fog film, and the time taken for the fogging to disappear was measured.
Incidentally, the conditions in the tables were as follows.
After immersion in water: The sample material was immersed in water for 10 seconds.
After steaming: Steam generated from a water bath having the temperature set at 40°C to 80°C was hit on the anti-fog film of the sample material. The height of the test material (anti-fog film) was set to 1.5 cm from the water surface.

(Measurement of water contact angle)

The water contact angle of the anti-fog film was measured. For the measurement, DropMaster DM-50 (manufactured by Kyowa Interface Science Co., Ltd.) was used. The volume of the dropped water was 1 μL.
Incidentally, the conditions in the table were as follows.
After immersion in water: The sample material was immersed in water for 10 seconds.
After steaming, the steam generated from a water bath having the temperature set at 40°C to 80°C was hit on the anti-fog film of the sample material for 10 seconds. The height of the sample material (anti-fog film) was set to 1.5

cm from the water surface.

(Transparency)

The transparency of the anti-fog film was evaluated by visual inspection. When no cloudiness or interference was confirmed, it was considered as "transparent".

(Liquid dripping)

0.5 mL of water was dropped on the anti-fog film, and the liquid dripping marks were checked by visual inspection. When no liquid dripping marks were confirmed, it was considered as "no change".

(Adhesiveness)

A cellophane tape (CT-18, manufactured by Nichiban Co., Ltd.) having a size of 1 cm on each side was stuck to the anti-fog film and was peeled off in the direction of 180°. Subsequently, a breathing test was carried out simultaneously for the tape-peeled part and the unpeeled part, and when the difference in the reduction of fogging between the tape-peeled part and the unpeeled part was 1 to 2 seconds or less at the time of carrying out the breathing test, the adhesiveness of the anti-fog film was considered to be "satisfactory".

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Treatment agent composition | Colloidal silica dispersion liquid | 1 | 2 | 3 | 1 | 1 | 1 | 1 | 1 | 1 | 1 |
| | Silane coupling agent dispersion liquid | - | - | - | 5 | 7 | 6 | 1 | 2 | 3 | 4 |
| Content of colloidal silica (% by mass) | | 2.3 | 2.3 | 2.3 | 2.2 | 2.2 | 2.2 | 2.2 | 2.2 | 2.2 | 2.2 |
| Amount of silane coupling agent with respect to 100 parts by mass of colloidal silica (parts by mass) | | - | - | - | 1.5 | 1.5 | 1.5 | 1.2 | 1.5 | 2.2 | 4.4 |
| Breathing test (s) | After film formation | 1 | 1 | 1 | 1 | 1 | 1 | 1 | 1 | 1 | 1 |
| | After immersion in water | 2 | 2 | 2 | 2 | 2 | 2 | 2 | 2 | 2 | 2 |
| | After steaming (40°C) | 1 | 1 | 1 | 1 | 1 | 1 | 1 | 1 | 1 | 1 |
| | After steaming (60°C) | 1 | 1 | 1 | 1 | 3 | 1 | 1 | 2 | 2 | 2 |
| | After steaming (80°C) | 1 | 1 | 1 | 1 | 3 | 1 | 1 | 2 | 3 | 3 |
| Water contact angle (°) | After film formation | 10~12 | 11~12 | 10~11 | 10~11 | 8~9 | 10~11 | 15~17 | 15~16 | 16~17 | 16~18 |
| | After immersion in water | 13~15 | 11~12 | 10~11 | 15~17 | 23~26 | 15~16 | 18~19 | 17~19 | 19~23 | 20~22 |
| | After steaming (40°C) | 10~12 | 11~12 | 10~11 | 10~12 | 10~15 | 11~13 | 14~16 | 14~16 | 15~16 | 14~16 |
| | After steaming (60°C) | 10~12 | 11~12 | 10~11 | 10~12 | 15~18 | 11~12 | 14~17 | 13~16 | 13~15 | 15~17 |
| | After steaming (80°C) | 15~18 | 14~16 | 13~15 | 10~13 | 20~22 | 13~15 | 16~18 | 16~18 | 15~20 | 18~25 |
| Transparency | | Transparent | Transparent | Transparent | Transparent | Transparent | Transparent | Transparent | Transparent | Transparent | Transparent |
| Liquid dripping | | No change | No change | No change | No change | No change | No change | No change | No change | No change | No change |
| Adhesiveness | | Satisfactory | Satisfactory | Satisfactory | Satisfactory | Satisfactory | Satisfactory | Satisfactory | Satisfactory | Satisfactory | Satisfactory |

[Table 2]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Treatment agent composition | Silane coupling agent dispersion liquid | 2 | 5 | 6 | 7 | - | - | - |
| | Polyether dispersion liquid | - | - | - | - | 1 | 2 | 3 |
| Breathing test (s) | After film formation | - | 5 | 7 | 5 | 2 | 2 | 1 |
| | After immersion in water | | 5 | 5 | 5 | 7 | 7 | 7 |
| | After steaming (40°C) | | 5 | 7 | 7 | 2 | 2 | 1 |
| | After steaming (60°C) | | 5 | 7 | 7 | 2 | 4 | 1 |
| | After steaming (80°C) | | 5 | 7 | 7 | 2 | 7 | 2 |
| Water contact angle (°) | After film formation | | 69-72 | 72-75 | 73-76 | 15-19 | 20-24 | 8~10 |
| | After immersion in water | | 73-75 | 73-76 | 73-76 | 84-86 | 84-86 | 69-75 |
| | After steaming (40°C) | | 73-76 | 84-86 | 80-82 | 23-25 | 20-25 | 8~10 |
| | After steaming (60°C) | | 69-75 | 78-83 | 82-84 | 22-27 | 50-62 | 8~11 |
| | After steaming (80°C) | | 69-77 | 80-82 | 81-83 | 22-28 | 81-83 | 9~13 |
| Transparency | | | Transparent | Transparent | Transparent | Transparent | Cloudy | Transparent |
| Liquid dripping | | | No change | No change | No change | No change | No change | No change |
| Adhesiveness | | | Satisfactory | Satisfactory | Satisfactory | Satisfactory | Satisfactory | Satisfactory |

By using a polycarbonate material with an anti-fog film, which corresponds to the above-described sample materials, a vehicle lamp structure which is not dependent on surfactant and has excellent anti-fog properties can be obtained. Superior anti-fog properties are exhibited depending on the addition of a silane coupling agent to the anti-fogging agent, change of the type of the silane coupling agent, adjustment of the amount of addition, and the like.

## Reference Signs List

1: lens, 2: anti-fog film, 3: lamp housing, 4: light source, 5: reflector, S: lamp chamber.

## Claims

1. An anti-fog method for a vehicle lamp structure, the method comprising:

    a step of applying an anti-fogging agent including colloidal silica and a liquid medium on a lens inner surface installed in a vehicle lamp structure to form a coating film; and
    a step of drying the coating film.

2. An anti-fogging agent comprising colloidal silica and a liquid medium.

3. The anti-fogging agent according to claim 2, wherein the content of the colloidal silica is 0.01% to 20% by mass.

4. The anti-fogging agent according to claim 2 or 3, further comprising a silane coupling agent.

5. The anti-fogging agent according to claim 4, wherein the content of the silane coupling agent is 0.1 to 10.0 parts by mass with respect to 100 parts by mass of the colloidal silica.

6. The anti-fogging agent according to any one of claims 2 to 5, wherein the liquid medium is water, an alcohol, or a mixed liquid of water and an alcohol.

7. A hydrophilizing agent comprising colloidal silica and a liquid medium.

*Fig.1*

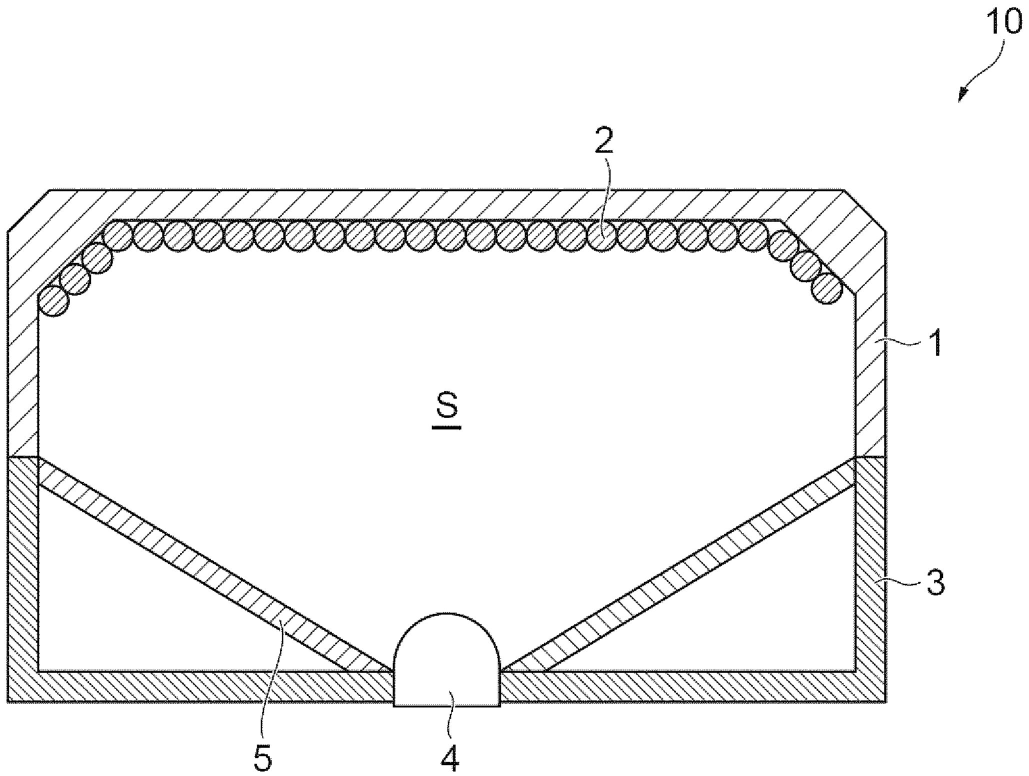

**INTERNATIONAL SEARCH REPORT**

International application No. PCT/JP2021/000579

A. CLASSIFICATION OF SUBJECT MATTER
C09K 3/00(2006.01)i; F21S 41/00(2018.01)i; F21S 45/00(2018.01)i
FI: C09K3/00 R; F21S41/00; F21S45/00
According to International Patent Classification (IPC) or to both national classification and IPC

B. FIELDS SEARCHED
Minimum documentation searched (classification system followed by classification symbols)
C09K3/00; F21S41/00; F21S45/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
Japio-GPG/FX

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/064973 A1 (FUJIFILM CORPORATION) 04 April 2019 (2019-04-04) claims, paragraphs [0002], [0044], [0147], examples | 1-3, 6-7<br>4-5 |
| X<br>Y | WO 2018/092543 A1 (FUJIFILM CORPORATION) 24 May 2018 (2018-05-24) claims, paragraph [0002], examples | 1-3, 6-7<br>4-5 |
| X<br>Y | JP 2016-130274 A (SEKISUI FILM CO., LTD.) 21 July 2016 (2016-07-21) claims 1-5, table 1 | 2-7<br>4-5 |
| X | JP 2000-154374 A (DAIKIN INDUSTRIES, LTD.) 06 June 2000 (2000-06-06) claim 1, examples 1-2 | 2-3, 6-7 |
| X | WO 2016/153050 A1 (SEKISUI FILM CO., LTD.) 29 September 2016 (2016-09-29) claim 1, table 1 | 2-3, 6-7 |
| X | JP 2018-65990 A (SEKISUI FILM CO., LTD.) 26 April 2018 (2018-04-26) claim 1, table 1 | 2-3, 6-7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>09 February 2021 (09.02.2021) | Date of mailing of the international search report<br>22 February 2021 (22.02.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/000579

C (Continuation). DOCUMENTS CONSIDERED TO BE RELEVANT

| Category* | Citation of document, with indication, where appropriate, of the relevant passages | Relevant to claim No. |
|---|---|---|
| X | JP 2015-168692 A (SEKISUI FILM CO., LTD.) 28 September 2015 (2015-09-28) claim 1, table 1 | 2-3, 6-7 |
| X | JP 2019-19253 A (NEOS COMPANY LIMITED) 07 February 2019 (2019-02-07) claim 1, table 1 | 2-3, 6-7 |
| A | WO 2015/152050 A1 (ASAHI GLASS CO., LTD.) 08 October 2015 (2015-10-08) claim 1, table 1 | 1-7 |
| A | JP 2016-27134 A (NOF CORPORATION) 18 February 2016 (2016-02-18) examples 1-20 | 1-7 |

Form PCT/ISA/210 (continuation of second sheet) (January 2015)

**INTERNATIONAL SEARCH REPORT**
Information on patent family members

International application No.
PCT/JP2021/000579

| Patent Documents referred in the Report | Publication Date | Patent Family | Publication Date |
|---|---|---|---|
| WO 2019/064973 A1 | 04 Apr. 2019 | (Family: none) | |
| WO 2018/092543 A1 | 24 May 2018 | US 2019/0264065 A1<br>claims, paragraph [0004], examples<br>EP 3543303 A1<br>claims, paragraph [0003], examples | |
| JP 2016-130274 A | 21 Jul. 2016 | (Family: none) | |
| JP 2000-154374 A | 06 Jun. 2000 | (Family: none) | |
| WO 2016/153050 A1 | 29 Sep. 2016 | (Family: none) | |
| JP 2018-65990 A | 26 Apr. 2018 | (Family: none) | |
| JP 2015-168692 A | 28 Sep. 2015 | (Family: none) | |
| JP 2019-19253 A | 07 Feb. 2019 | (Family: none) | |
| WO 2015/152050 A1 | 08 Oct. 2015 | US 2017/0015860 A1<br>claim 1, table 1 | |
| JP 2016-27134 A | 18 Feb. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016027134 A